Europäisches Patentamt

European Patent Office

Office européen des brevets

(11) Publication number: **0 248 502**
**A1**

## EUROPEAN PATENT APPLICATION

(21) Application number: **87201064.0**

(22) Date of filing: **05.06.87**

(51) Int. Cl.³: **B 65 G 1/06**

(30) Priority: **06.06.86 NL 8601467**

(43) Date of publication of application:
**09.12.87 Bulletin 87/50**

(84) Designated Contracting States:
**DE ES FR GB IT NL SE**

(71) Applicant: **ELTEN NEDERLAND B.V.**
**Baron van Nagellstraat 174**
**NL-3771 LL Barneveld(NL)**

(72) Inventor: **De Vries, Hugo Victor**
**Hamburgerweg 144**
**NL-3851 EP Ermelo(NL)**

(74) Representative: **Kooy, Leendert Willem et al,**
**OCTROOIBUREAU VRIESENDORP & GAADE P.O. Box 266**
**NL-2501 AW The Hague(NL)**

(54) Conveyor device.

(57) A conveyor system is described, adapted for application in a storage rack, consisting of a plurality of storeys with a plurality of storage tracks (0) side by side in each storey, each storage track (0) containing a conveyor device. The conveyor system is characterized in that each conveyor device consists of two or more and independently and separate working conveyors (2).

FIG.1

Conveyor device.

The invention relates to a conveyor device suitable for application in a storage rack consisting of a plurality of storeys with a plurality of storage tracks side by side in each storey, each storage track containing a conveyor device.

Storage racks of the above described type are used on a large scale by dairy manufacturers, bread manufacturers, beer and softdrinks manufacturers and the like. There, the conveyor device in every storage track has a substantially flat one-piece upper surface, supporting mainly the center part of the products such as boxes, crates. There the storage and the conveyance of objects with a flat under surface, such as crates, cases, boxes and the like, does not present difficulties. When, however, objects with a convex bottem or vertically disposed high objects, such as barrels or stacks of crates, boxes and the like, should be stored and conveyed, these objects have a bad stability on a conveyor device with a one-piece flat upper surface. With the storage and the conveyance of stacks of crates, the bottom crate must, moreover, carry a relatively large load, as a result of which the danger of rupture of the crate exists.

With the storage and the conveyance of relatively wide objects on a conveyor device with a relatively small upper surface, the bottom of the objects may sag at both sides of the conveyor device, as a result of which the conveyance may be hampered.

The object of said invention is to overcome the objections of the above described known conveyor device.

This object is attained, by that according to the invention each conveyor device consists of two or more separate and independently working conveyors.

By applying this measure, objects with a convex or irregularly shaped bottom, for example a damaged bottom, have a much better stability, when they are supported at the side or outer edges than when supported at the center of a one-piece flat supporting face.

The support of for example a stack of (filled) crates by means of two spaced conveyors, which carry the stack at the corners and side edges of the bottom crate, gives a much greater resistance against rupture of the bottom crate, and the stack yet remains standing with hidden ruptures. Trays with low side walls have strongly sagging bottoms. With the support by means of two separate conveyors near the side edges, the sagging can be large without interfering with the storage or the coneyance. Furthermore, by applying two separate conveyors in one storage track, the objects to be conveyed may even be disposed between the conveyors, as a result of which a considerable vertical space-saving is attained. When there are no objects on the conveyors, one may easily walk through the conveyor tracks to do maintenance, repairs , cleaning activities and the like. There the conveyors will have to be supported then by consoles on vertical pillars of the staging.

With a preferred embodiment of the conveyor device according to the invention, a longitudinal guide for the objects to be conveyed is situated at the outside of the outer conveyors in each storage track, said longitudinal guide lying under the conveyor surface.

With this embodiment of the conveyor device according to the invention, the conveyor device is pre-eminently suitable for the storage and the conveyance of so called Tetra-H-crates which are H-shaped in side view and which can be led by said longitudinal guide at the inner side of the legs of the H.

With a special efficient embodiment of the conveyor device according to said invention the longitudinal guides are reversible.

By applying these longitudinal guides, which in the one postion extend above the supporting face of the conveyors and which in the reversed position are situated under the supporting face, in the one position of the longitudinal guides block-shaped crates may be stored and guided while being conveyed, while in the reversed position of the longitudinal guides the Tetra-H-crates may be stored and guided while being conveyed.

Another advantage of this embodiment of the conveyor device according to the invention, is that users of the block-shaped crates who want to switch to H- or Tetra-H-crates, do not have to replace the whole stock of block-shaped crates by Tetra-H-crates in one time. This replacement may occur gradually, if desirable even the crates for one storage track at a time.

According to the invention, the reversible longitudinal guide furthermore consists of the half of a U-shaped profile, the leg of which is resiliently movable with respect to the basis of the U.

With said embodiment of the conveyor device said longitudinal guides can be switched easily and quickly from the use of block-shaped crates to the use of Tetra-crates and the other way round.

The invention will be elucidated by means of a few embodiments shown in the drawings.

Figure 1 is a cross-section of the conveyor device according to the invention;
figure 2 is an upper view of the connection of one of the conveyors with a driving device;

figures 3A and 3B show a side view of the toppling cam of the step conveyor in postition of rest and in position of conveyance respectively figure 4 is a front view of the conveyor device according to the invention for box-shaped crates;

Figure 5 is a front view of the conveyor device according to the invention for Tetra-crates, and figure 6 is a cross-section of a third embodiment of the conveyor device according to said invention, only the left conveyor of the conveyor device consisting of two conveyors being drawn.

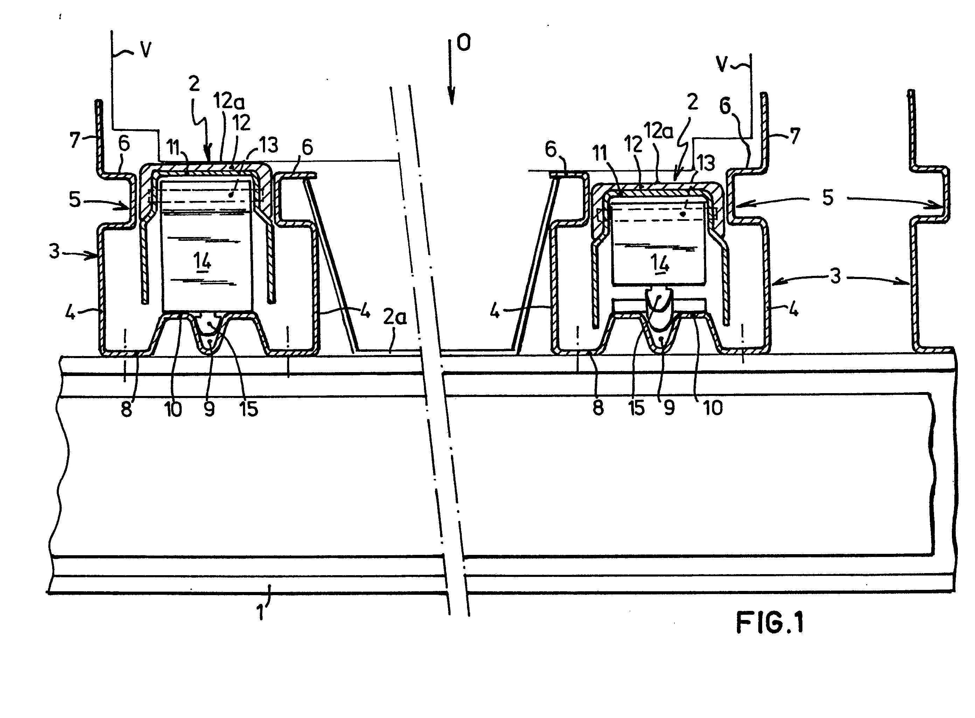

In figure 1 the cross-section of the conveyor device according to the invention is drawn in one storage track O of the staging, which staging is devided in storeys by rows of horizontal supporting beams (1), which at the extremities are supported on vertical pillars (not drawn). On each storey a plurality of storage tracks O lie side by side.

The conveyor device according to the invention, consists of two or more, with the drawn embodiment two, separate and independently working conveyors (2), which, according to the invention, are constructed as step conveyors.

The step conveyors (2) are provided with a U-shaped supporting beam (3), to which at the inner side of the legs (4) U-shaped supports (5) with supporting faces (6) for the objects V to be conveyed are formed.

Between the step conveyors (2) on the supporting beam (1) a gutter-shaped profile (2a) is mounted, which rests with the bottom on the supporting beams (1) and the free edges of the side walls of which extend into the U-shaped supports (5) in the legs (4) of the supporting beams (3) of the step conveyors (2). The gutter-shaped profiles (2a) are used for example for catching leakage liquid and/or other pollutions.

The basis or the bottom (8) of the supporting beam (3) is provided with a V-shaped groove (9) in the center, which is flanked by guide planes at the upper outer side. The funtion thereof will later be explained.

According to the invention at least one conveyor (2) may be laterally displaceably mounted on the supporting beam (1) with the bottom or basis (8) with respect to the other conveyor(s) (2), for example with the aid of bolts, which may be displaced and fixed in slots in the supporting beam (1).

The step conveyors (2) are furthermore provided with a reversed U-shaped conveyor beam (11), which is covered at the upperside by a reversed U-profile (12) which is manufactured of plastic. The U-profile (12) serves as a "slide bearing" between the conveyor beam (11) and the U-shaped supports (5).

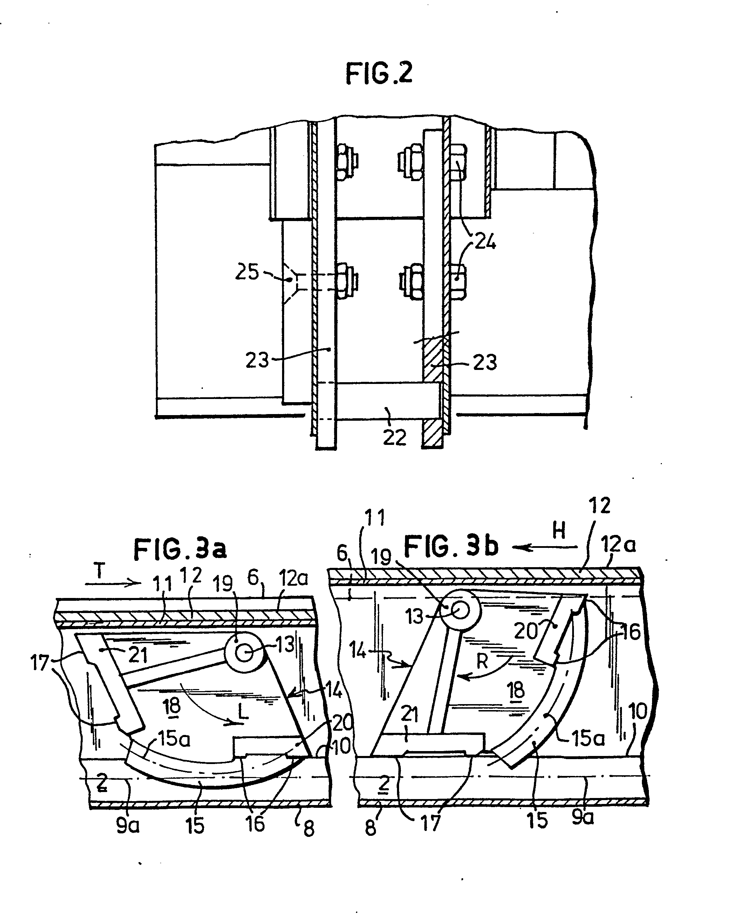

At the bottom side of the conveyor beam (11) toppling cams (14) are mounted, which are suspended to pivot shafts (13), also vide figure 3, and which are provided with a spiral running surface (15), the cross section of which is substantially trapezium-shaped with convex flanks and for example corresponds with that of an evolvent tooth shape of a gear wheel and which cooperates with the V-shaped groove (9) in the bottom (8) of the supporting beam (3).

Due to this cross-sectional shape of the running surface (15), the friction between the running surface (15) and the side walls of the V-shaped groove (9) in the bottom (8) of the supporting beam (3) will be larger than with a running surface (15) with flat flanks. Furthermore, the course of the spiral running surface (15) with respect to the centerline of the pivot shaft (13) corresponds with the course of a logarithmic spiral curve. It is the object of this, to keep the ascending angle constant when the radial distance between the running face (15) and the centerline of the pivot shaft (13) becomes larger or smaller.

At both extremities of the running surface (15) a guide face (16) and (17) respectively is connected, which can cooperate with the guide faces (10) at both sides of the V-shaped groove (9) in the bottom (8) of the supporting beam. The slide faces (16 and 17) enclose an angle varying from 90° to 135°. The slide face (17) lies at a larger radial distance from the pivot shaft (13) than the slide face (16) and therewith the radial distance between the running surface (15) and the pivot shaft (13) increases in the direction from the slide face (16) to the slide face (17).

The center of gravity of the toppling cam (14) lies at such a position that the toppling cam has the tendency to rolate from the position drawn in figure 3A in the direction of arrow L and to rolate from the position drawn in figure 3B in the direction of arrow R. The lines along which the spiral running surface (15) and the walls of the V-shaped groove (9) cooperate, are indicated at 15a, 19a respectively in the figures 3A and 3B.

The toppling cam (14) has furthermore a web (18) on which a bearing sleeve (19) and two slide feet (20 and 21) stand transversely, the bearing sleeve (19) being mounted on the pivot shaft (13) and the slide feet (20 and 21) being provided with the slide faces (16) and slide (17) respectively at the side which is turned away from the bearing sleeve (19).

The step conveyors (2) are, vide figure 2, yet provided with a coupling pin (22) which is connected solidly to the conveyor beam (11) by strips (23) and bolts (24) and (25) and which is connectable to a driving device (not drawn).

The step conveyors (2) work in the following manner:

In the position according to figure 3A, the state of rest, the slide faces (16) of the toppling cams (14) rest on the slide faces (10) of the bottom (8) of the supporting beam (2). Therewith the conveyor face (12a) of the conveyor beam (11,12) lies under the supporting faces (6) of the supporting beams (5) and the conveyor beam (11,12) moves under the objects (V) back in the direction of arrow (T) in figure 3A; this is the reversed stroke of the conveyor beam (11,12).

During the forward stroke, the working stroke, in the direction of the arrow H in figure 3B, the toppling cam (14) as a result of the gravity, rotates first from the postion according to figure 3A in the direction of arrow L until the centerline 15a is at thesame height as the centerline 9a and the friction coupling between the toppling cam (14) and the V-shaped groove (9) has been established.

During the further forward stroke H, the toppling cam (14) is turned in the direction of arrow L by friction between the running surface (15) and V-shaped groove (9), until the slide face (17) rests on the slide faces (10). Thereby the conveyor beam (11,12) is pressed upwardly, the conveyor face (12a) being moved to a higher level than the supporting faces (6). Then the objects (V) are taken along by the conveyor beam (11,12) till the end of the leading stroke H, whereby the slide faces (17) slide over the slide faces (10).

At the beginning of the reversed strok T (figure 3A) the toppling cam (14), as a result of the gravity, rotates in the direction of arrow R in figure 3B until the running surface (15) comes into frictional engagement with the V-shaped groove (9).

0248502

During the further reversed stroke T the toppling cam (14) rotates in the direction of arrow R, until the slide face (16) rests on the slide faces (10). Thereby the conveyor face (12a) has moved again to a lower level than the supporting faces (6) and the reversed stroke T is being completed, whereby the slide face (16) slides over the slide faces (10).

The slide faces (16) and (17) and the running surface (15) are disposed and shaped such, that the transitions from the slide face (16) to the running surface (15) and from the running surface (15) to the slide face (17) and the other way round, proceed gradually and without shocks.

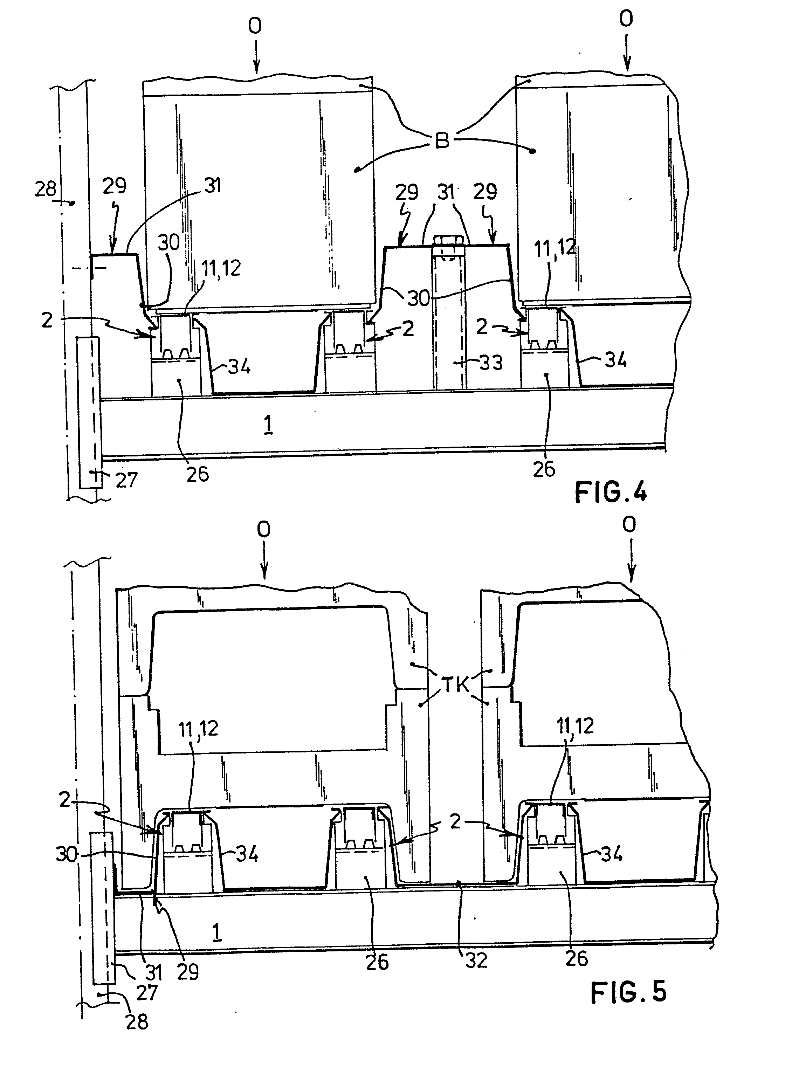

In the figures 4 and 5 the conveyor device according to invention is drawn, the device according to figure 4, being adapted to the storage and the conveyance of usual block-shaped crates B, while the device according to figure 5, is adapted to the storage and the conveyance of Tetra-H-crates TK. The conveyor devices according to figures 4 and 5 are specially meant for storage and coveyance of stacks of two or more crates, whereby the crates of course may be stored and conveyed unstacked.

The conveyor device in each storage track O consists of two step conveyors (2), which are supported by means of consoles (26) on the supporting beams (1), which supporting beams (1) are applied to vertical pillars (28) by means of supports (27). The function of the consoles (26) will be further explained.

According to the invention a longitudinal guide (29) for the crates B and TK to be conveyed is applied in each storage track O at the outside of the outmost conveyors (2). According to the invention, this longitudinal guide, compare the figures 4 and 5, is reversible and consists of the half (29) of a U-shaped profile, the leg (30) which is resiliently movable with respect to the basis (31) of the U-profile. Furthermore, according to the invention, the both half U-profiles (29) of two adjacent storage tracks O may be connected to each other as a one-piece U-profile (32) (figure 5).

According to figure 4, the U-profile halves (29) are disposed in reversed position, being at one side fixed with the basis (31) to the pillar (28). Because the leg (30) is resiliently movable with respect to the basis (31), the free edge of the leg (30) of the U-profile half (29) may resiliently extend into the U-shaped supports (5) in the legs (4) of the supporting beams (3) of the conveyors (2), compare figure 1. Between two conveyor tracks 0 both U-profile-halves (29) are fixed with the edges of the basis (31) on a central support (33). In the position of the U-profile-halves (29) drawn in figure 4, the legs (30) thereof form a longitudinal guide for the box-shaped crates B.

With the conveyor device according to figure 5, the U-profile halves (29) are mounted in reversed position with respect to the postition according to figure 4. Here the legs (30) of the U-profile halves (29), which are then situated under the conveyor face of the conveyors (2), form a longitudinal guide for the cross beams of the Tetra-crates TK, while the conveyor beams (11,12) may convey the Tetra-crates TK by means of webs thereof.

With the embodiment according to figure 5, the U-profile halves (29) are fixed with the bases (31) to the pillar (28) or the supporting beam (1) and the free edges of the legs (30) extend from the bottom side, compare figure 1 into the U-shaped supports (5) in the legs (4) of the supporting beams (3).

With the embodiment according to figure 5, both U-profile halves (29) between the conveyor tracks 0 are connected to each other as a one-piece U-profile (32). Here the central support applied in figure 4 has been left out.

With the embodiment according to figure 5, the conveyors (2) have to be supported on consoles to make space for the cross beams of the Tetra-crates TK, which may not rest on the supporting beams (1) with storage and conveyance.

With the embodiment of the conveyor device according to figure 4, the conveyors (2) are also supported by means of consoles (26) on the supporting beams (1).

Between both conveyors (2) of the conveyor devices according to figures 4 and 5, gutter-shaped profiles (34) are placed on the supporting beams (1), as well as with the embodiment according to figure 1, said profiles being secured in the same way as the gutter-shaped profiles (2a) (figure 1) and which have the same function.

The embodiment of the conveyor device according to figure 4 may be easily transformed into the embodiment according to figure 5 and the other way round, by simply mounting the U-profile halves (29) in reversed positon. Added to this, both U-profile halves (29) between the conveyor tracks O (figure 4) may also be replaced by a one-piece U-profile (32) according to figure 5, with which the central support may be left out.

The embodiments of the conveyor devices according to the figures 4 and 5 make it very easy to change from the box-shaped crates B to the Tetra-crates TK and the other way round.

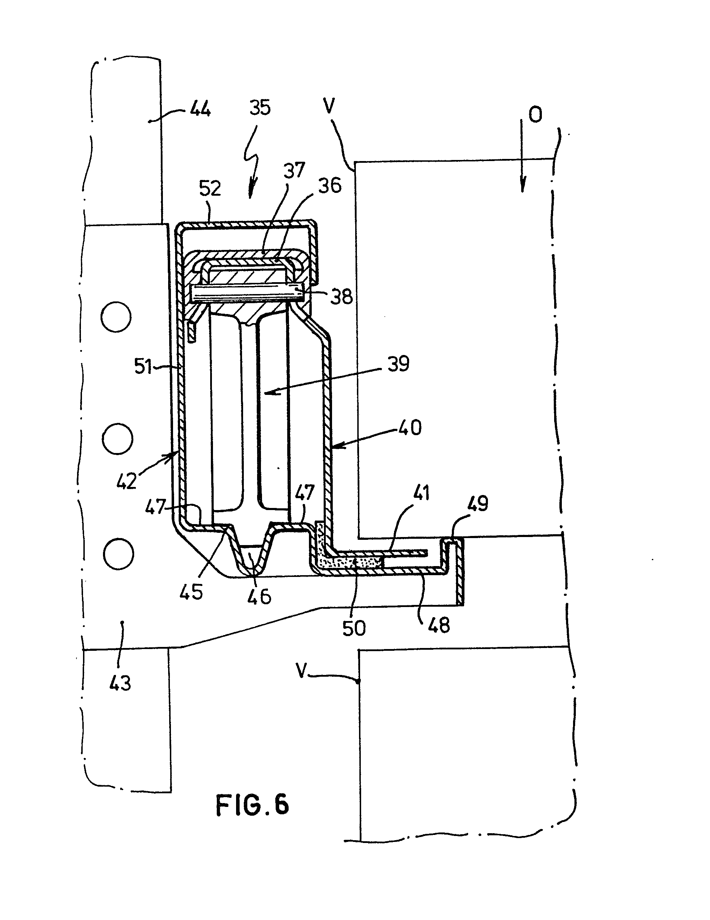

Figure 6 shows a cross-section of the left conveyor (35) of the third embodiment of the conveyor device according to the invention, consisting of two conveyors. The conveyor (35) consists of a step conveyor, which is provided with a U-shaped conveyor beam (36,37), at the under side of which toppling cams (39) are pivotably mounted on shafts (38). So far, the construction of the conveyor beam (36,37) is equal to that of the conveyor beam (11,12) according to the figures 1, 2 and 3.

The conveyor beam (36,37) according to figure 6 is provided with an L-shaped conveyor part (40) with a conveyor face (41) for the objects V, which is situated adjacent and at the side of the drawn left conveyor (35), which faces the other (right) conveyor (35) (not drawn), said conveyor face lying at a lower level than the upperside of the conveyor (35).

The conveyor (35) furthermore consists of a L-shaped supporting beam (42), which is supported on an L-shaped console (43), which is attached to a vertical pillar (44) of the rack. The supporting beam(42) has a bottom (45), in which a V-shaped groove (46) has been applied, which at the upperside is flanked by slide faces (47) and which bottom (45) at the side of the conveyor part (40,41) is provided with a carrier (48) having a supporting face (49), on which rest the objects V to be conveyed. Between the L-shaped conveyor part (40,41) and the carrier (48), which is fixed to and supported by the console (43), a slide cushion (50) has been applied.

At the upperside of the vertical leg (51) the supporting beam (42) is provided with a reversible U-shaped cover (52), which guides the upperside of the conveyor beam (36,37) and covers it at the same time.

The construction of the not drawn right conveyor (35) of the conveyor device and the conveyor trak 0 is equal to that of the drawn conveyor (35), but executed in mirror image with respect to that.

The working of the step conveyors (35) is equal to that of the step conveyors (2) according to the figures 1, 2 and 3, with this addition that during the reversed or non acting stroke T of the conveyor beam (36,37,40,41), the L-shaped conveyor part (40,41) is guided and supported through the slide cushion (50) on the carrier (48).

With the conveyor device according to figure 6, a considerable space-saving in height direction may be achieved with respect to the objects V to be conveyed.

tD/EMB

-1-

1. Conveyor device suitable for application in a storage rack consisting of a plurality of storeys with a plurality of storage tracks (0) side by side in each storey, each storage track containing a conveyor device, <u>characterized in that</u> each conveyor device consists of two or more separate and independently working conveyors (2).

2. Conveyor device according to claim 1, <u>characterized in that</u> at the outside of the outer conveyors (2) in each storage track (0) there is a longitudinal guide (29,32) for the objects TK to be conveyed, the longitudinal guide lying under the conveyor surface.

3. Conveyor device according to claim 2, <u>characterized in that</u> the longitudinal guides (29,32) are reversable.

4. Conveyor device according to claim 3, <u>characterized in that</u> the reversible longitudinal guide consists of the half (29) of an U-shaped profile, the leg(30),of which is resiliently movable with respect to the basis (31) of the U.

5. Conveyor device according to claim 4, <u>characterized in that</u> both half U-profiles (29) of two adjacent storage tracks (0) are connected to each other in a one-piece U-shaped profile (32).

6. Conveyor device according to one of the preceding claims, <u>characterized in that</u> at least one conveyor (2) is laterally displaceable with respect to the other conveyor(s).

7. Conveyor device according to one of the preceding claims, which consists of two separate conveyors, <u>characterized in that</u> the conveyor face (41) and the supporting face (47) of each conveyor (35) is next to and at the side of the conveyor, which is turned to the other conveyor and lies at a lower level than the upper side of the conveyor.

8.  Conveyor device according to one of the preceding claims, characterized in that each conveyor is a step conveyor (2).

9.  Conveyor device according to claim 8, characterized in that each step conveyor (2) consists of an U-shaped supporting beam (3), supporting faces (6) for the objects (V) to be conveyed being formed at the legs (4) of the U-shaped supporting beam and a V-shaped groove (9) being formed in the basis of the U, which groove is flanked by slide faces (10) at the open upperside at both sides, and of a reversed U-shaped conveyor beam (11,12), which at the underside is provided with pivotable toppling cams (14) with a spiral running surface (15), which cooperates with the V-shaped groove (9) and to which at both extremities a slide face (16,17) is connected, which can cooperate with the slide faces (10) on the base of the U.

10. Conveyor device according to claim 9, characterized in that the slide faces (16,17) of the toppling cams (14) enclose an angle varying from 90° to 135°.

11. Conveyor device according to claim 9 or 10, characterized in that the running surface (15) of the toppling cam (14) has a trapezium shaped cross-section with convex flanks and that the course of the spiral running surface (15) with respect to the centerline of the pivot shaft (13) corresponds with the course of a logarithmic spiral curve.

FIG.1

1/4

0248502

## FIG.2

## FIG.3a

## FIG.3b

FIG.4

FIG.5

FIG.6

0248502

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | DE-A-2 936 532 (M. KETTNER) * Page 15, line 16 - page 18, line 28; figures * | 1,2,8 | B 65 G 1/06 |
| Y | EP-A-0 035 818 (VAN ELTEN B.V.) * Page 20, line 4 - page 21, line 12; figures * | 1,2,8 | |
| A | | 9-11 | |
| A | US-A-4 009 774 (D.E. LUTZ) * Column 2, line 51 - column 3, line 16; figure 3 * | 7 | |
| A | FR-A-2 307 727 (N.K. ACKER) * Page 6, lines 19-26; figures 5,6 * | 1 | |

TECHNICAL FIELDS SEARCHED (Int. Cl 4)

B 65 G

The present search report has been drawn up for all claims

| Place of search THE HAGUE | Date of completion of the search 02-09-1987 | Examiner VAN ROLLEGHEM F.M. |
|---|---|---|